# EUROPEAN PATENT APPLICATION

(11) **EP 1 955 793 A1**
(43) Date of publication of application: **13.08.2008**
(21) Application number: 08250111.5
(22) Date of filing: 10.01.2008
(51) Int. Cl.: B22C 21/14, B22C 23/00, G01B 5/06

(54) **Core pinning machine performing wax thickness measurement**

(30) Priority: 09.02.2007 GB 0702516
(71) Applicant: Rolls-Royce plc, 65 Buckingham Gate London SW1E 6AT (GB)
(72) Inventor: Draper, Owen Thomas, West Bridgford, Nottingham, NG2 5DQ (GB); Fox, Paul, Littleover, Derby DE23 1WF (GB)
(74) Representative: Gunn, Michael Alan

(57) **Abstract**

Determination of thickness of compliant material 4 such as a wax upon non compliant cores 5 formed from ceramic utilised particularly with regard to lost wax casting techniques is important. It is also necessary generally, to support the cores 5 within the compliant wax material. Both processes can be time consuming and inaccurate. By use of pins in the form of penetration elements 7 in order to determine through penetrative depth measurement of the thickness of the compliant material 4 and then retaining the penetrative element 7 as a pin 7a to support the core 5, it is possible to create a more time efficient and accurate process.

## Description

The present invention relates to apparatus and methods for depth determination and particularly with regard to depth of compliant materials such as wax used to form mould shells in lost wax casting techniques.

To support the disposable ceramic cores within a casting cavity it is known to provide pins and in particular platinum pins which are pressed through a wax surface such that the end of the pin is in contact with the core surface to support it. It will be appreciated the wax is used in a lost wax shell forming process. The pin extends through the wax and into free space such that the wax component when shelled, that is to say a mould surface is formed about the wax, the end of the pin is attached to the shell material and can still support this core. The contour of the wall section, that is to say the gap between the inner shell surface and the outer core surface as created by the thickness of wax, is critical to the investment casting process. It will be understood that this is substantially the thickness of the component once cast.

Previously, wax wall sections have been measured using ultra sound techniques. These ultra sound techniques are not automated and require a skilled operator to manoeuvre a probe or stylus over the surface of the wax and take several readings to establish the gap between the external wax wall surface and the interior core wall surface. The readings are dependent upon the type of wax used, the angle at which the probe or stylus is orientated relative to the surface of the wax and can, particularly for large wax thicknesses, be unreliable. Furthermore, it will be understood that providing a wax wall thickness measurement procedure in addition to a pinning procedure to support the ceramic cores is time consuming.

In accordance with aspects of the present invention there is provided a method of determining depth in a compliant material using a penetrative element driven through the compliant material to a non compliant core, the method characterised by:
a) positioning a guide to present the penetrative element to provide contact behind an end of the penetrative element and the compliant material as a start position.
b) driving the penetrative element through the compliant material to engage with the non compliant core whilst monitoring such engagement by necessary drive load upon the penetrative element and,
c) comparing the start position with an engagement position at which the penetrative element engages with the non compliant core to determine the depth of the compliant material by displacement length of the penetrative element.

Further in accordance with aspects of the present invention there is provided a measuring apparatus for determining the depth of a compliant material, the apparatus comprising a guide to present a penetrative element and to drive the penetrative element through the compliant material to a non compliant core, the apparatus characterised in that the guide has a drive element to drive initially the penetrative element until engagement with the compliant material as a start position and then to drive the penetrative element through the compliant material to engagement with the non compliant core as an engagement position and monitor variation in necessary drive load for the penetrative element to determine the start position and the engagement position, the apparatus including a comparator for comparison between the start position and the engagement position to determine a depth for the compliant material by displacement length of the penetrative element.

Also in accordance with aspects of the present invention there is provided a cast mould pre-form comprising a non compliant core with a compliant material between that core and a shell with the core supported by penetrative elements utilised in accordance with the above method and apparatus to determine the depth of the compliant material.

Typically, the guide is offset from the compliant material. Generally, the penetrative element is perpendicular to the compliant material.

Generally, the penetrative element is a wire.

Normally, the penetrative element is heated to facilitate drive through the compliant material. Possibly, the penetrative element is heated by the guide.

Typically, the penetrative element is retained within the compliant material. Generally, the penetrative element supports the non compliant core. Possibly, the penetrative element is retained by removing heat from the penetrative element to allow the compliant material to retain the penetrative element. Typically, the penetrative element is a consumable and a proportion of the penetrative element extends beyond the compliant material as a tail. Typically, the tail is engaged by a shell material located about the compliant material.

Possibly, the penetrative element is delivered by a reel. Alternatively, the penetrative element is provided by a magazine or a hopper and selector of penetration elements.

Generally, the guide acts as an anvil to drive the penetrative element as a pin into the compliant material.

Generally, the compliant material is a wax.

Possibly, the shell about the compliant material allows removal of the compliant material to provide a casting mould.

Generally, the apparatus incorporates a cradle to support the compliant material. Possibly, the cradle allows orientation of the penetrative element relative to the compliant material. Typically, the cradle allows single axis rotation of the compliant material.

Generally, the non compliant material is a ceramic.

Possibly, the penetrative element is provided upon a reel and the start position and the engagement positions are determined by monitoring rotation of the reel.

Possibly, the penetrative elements incorporate a visually graduated scale.

An embodiment of aspects of the present invention will now be described by way of example and with reference to the accompanying drawings in which;
Fig. 1 is a schematic illustration of an apparatus in accordance with aspects of the present invention at an initial position;
Fig. 2 is a schematic illustration of the apparatus depicted in Fig. 1 at an intermediate stage; and,
Fig. 3 is a schematic illustration of the apparatus depicted in Figs. 1 and 2 subsequent to depth determination.

As indicated above, determining the depth of a compliant material to a penetration element such as a pin such as wax in a lost wax casting process is important in order to achieve the desired final cast product. Typically, a central ceramic core which generally is non compliant, that is to say cannot be penetrated by the penetration element and is utilised within the casting process in order to define the desired shape. In such circumstances the non compliant core in the form of a ceramic will be located and positioned appropriately within a body of compliant material such as wax. The non compliant ceramic cores are supported and presented upon pins which extend through the compliant wax. Generally, a number of such pins are provided to appropriately locate each non compliant core. The pins are typically formed from a platinum wire and extend beyond the compliant material with tails to become incorporated in the casting shell when formed. The pins can also be formed from other suitable materials. The pins extend to touch the ceramic core and so between them as presented and retained in the wax, locate the cores within the cast.

In accordance with aspects of the present invention provision of such support and presentation pins is utilised in order to determine compliant material depth. In such circumstances two prior processes, that is to say location of the pins as well as determining wax depth are combined in a single operation.

In accordance with aspects of the present invention an injected wax pattern is located within a cradle. This wax pattern, as indicated, will define the article to be cast typically through a lost wax process. The cradle is utilised in order to ensure good location and presentation of the compliant material wax pattern but other location methods are also possible such that typically a six point nest approach is taken so that the compliant material pattern can be accurately surveyed for positioning of pins. Normally, each wax pattern will be specifically identified through an identifying number input by an operator or a scanned label utilised so that the compliant material pattern can be appropriately manipulated. The identifying number will be read and the cradle moved to present the pattern to a guide element of an apparatus for measuring depth and pin driving into the compliant material.

Once located within the cradle it will be understood that this cradle will be utilised in order to present pins in accordance with the support aspects of the present invention but also in order to determine depth of the compliant material, that is to say wax in the pattern to the underlying non compliant cores. In such circumstances the cradle is manipulated, that is to say orientated to present the pattern appropriately to a measuring/pinning apparatus. The cradle and associated compliant material wax pattern will be moved under a guide head in accordance with aspects of the present invention such that a precise area of the pattern can be measured and pinned in accordance with the method of the present application. The pins, as indicated above, are typically platinum or other suitable wire driven into the compliant wax material. The cradle is rotated to ensure that the wax pattern is correctly aligned such that measurement/pinning for support of the underlying non compliant ceramic cores is achieved. Typically, the pins will be presented at a perpendicular attitude, that is to say 90° angle of drive attack for the penetrative element formed by the platinum wire in accordance with aspects of the present invention relative to the surface of the compliant wax. However, other angles can be required to achieve appropriate presentation. The use of trigonometry is used to calculate wax depth. Depth distribution may also be achieved by measuring the distance of travel by the wire by calculating how far the reel has rotated round.

As will be described later, the penetrative element in the form of the platinum wire is typically a consumable wire drawn from a reel above the guide device in accordance with aspects of the present invention.

In terms of operation initially a defined length of penetrative element, that is to say platinum wire is drawn into the guide such that it can be heated to a desired temperature sufficient to cause and facilitate penetration through the compliant material. Once heated the guide generally is then lowered to a point above the compliant surface such that the distance to the compliant surface from the end of the wire is of a set length or can itself be measured in order to achieve a set distance between the guide and the compliant surface. Once in an operational configuration the penetrative element in the form of a wire is further lowered progressively until the bottom of the wire touches the surface of the compliant material, that is to say the wax. This contact is a start position for the method in accordance with aspects of the present invention. As the penetrative element is heated it is driven through the compliant material until it touches the non compliant core surface. In such circumstances upon initial contact with the compliant material, it will be appreciated that the guide is arranged to acknowledge through monitoring of necessary increase in drive load to force the penetrative element through the compliant material initially in order to define the start position, that is to say where the penetrative element contacts the compliant material and a final engagement position where the penetrative element engages the non compliant core and is therefore halted with respect to further penetrative driving. The guide in such circumstances will sense the increase in load experienced by the wire generally by means of a load sensing device which provides a perceivable hike in the necessary drive load upon contact with the non compliant core. It will be understood that the resistance or drive load with respect to the penetrative element in the form of the platinum wire will depend upon the nature of the compliant material, the form of wax as well as the degree of heating of the penetrative element, but in any event there will be distinct hikes in necessary drive load at initial contact with the compliant material and with the non-compliant core.

In order to determine the drive distance, that is to say the distance between the surface of the compliant material wax and the surface of the non compliant core, a calculation is conducted by determining the axis movement of the guide in order to drive the penetrative element through the compliant material to the core. The penetration element may be presented perpendicularly or non-perpendicularly with other distance (depth) determined by trigonometry. Generally, this distance is electronically stored and tagged so that data is associated with the particular pin location and individual wax pattern serial number attributed to the pattern as described above. The results can be compared with expected results for the pattern.

As the penetrative element in accordance with preferred aspects of the present invention is heated to penetrate through the compliant wax it will be appreciated that generally the guide holds the wire in place until the wax surrounding the wire is sufficiently cooled to allow it to self support and retain the wire in position. Once the penetrative element is located as described it will be understood that the penetrative element is then cut to act as a support pin in accordance with typical lost wax casting process. Once the penetrative element has been cut generally a proportion of the penetrative element will still extend beyond the compliant material such that this will act as a peg anchor when a casting shell is located about the compliant material. In such circumstances the guide can then be returned to its original position, the cradle aligned to a next measurement/pinning location on the wax pattern and the process repeated. In such circumstances by a combination of measuring and pinning processes repeatedly about the pattern information attributable to each pin as well as pins provided to support the non compliant ceramic cores.

It will be appreciated that by use of the present invention combines pinning and measurement operations so that patterns incorporating ceramic cores which are out of specification can be identified and scrapped at this stage rather than subsequently, that is to say after casting.

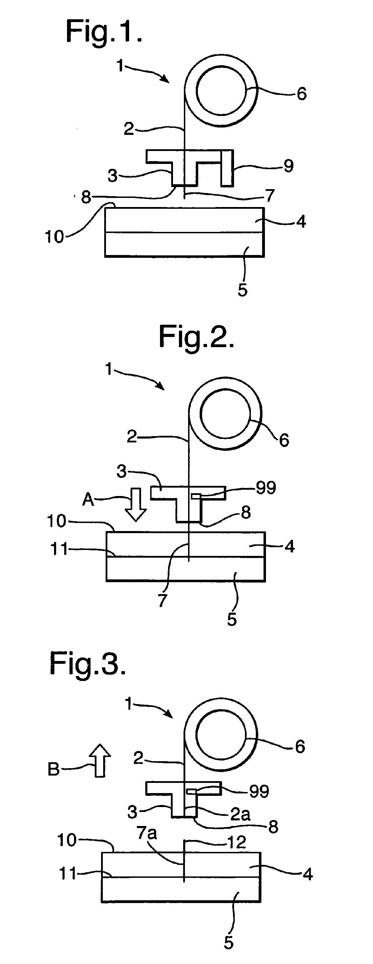

Attached Figs. 1 to 3 illustrates schematically three stages of a method in accordance with aspects of the present invention utilising apparatus for measurement in accordance with aspects of the present invention.

In Fig. 1 an apparatus 1 in accordance with aspects of the present invention is depicted comprising a wire 2 which extends through a guide 3 towards a compliant material such as wax 4 with an underlying non compliant typically ceramic core 5. As can be seen the wire 2 extends from a reel 6. The purpose of the guide 3 is to appropriately present the wire 2 as a penetrative element 7 extending from a guide 3. This penetrative element 7 extends beyond the guide 3 and in accordance with the initial configuration as depicted in Fig. 1, is arranged to extend a pre-determined extent beyond that guide 3. The guide 3 also in accordance with one embodiment of aspects of the present invention heats the wire 2 and therefore the penetrative element 7 to allow or facilitate penetration through the compliant material 4. In accordance with aspects of the present invention the penetrative element 7 is robust and, as illustrated in Fig. 1, presented substantially perpendicular, that is to say at 90° to the compliant material 4. As the guide 3 incorporates a heater it will be appreciated that it is desirable that there is a space between the guide 3 and the compliant material 4 particularly if a wax. In such circumstances, as indicated, the wire 2 can be extended a predetermined distance beyond the guide outlet surface 8 such that when the guide 3 is lowered this contact distance comprises an offset distance between the guide 3 and the compliant material 4. Alternatively or as a further determinant measure, a distance to surface measurement device 9 can be provided such that the offset between the guide 3 and an upper surface 10 of the compliant material 4 can be determined.

As indicated, in accordance with the method and operation of the apparatus 1 the wire 2 is extended beyond the guide 3 to create the penetrative element 7. This extended penetrative element 7 is then lowered with the guide 3 until an end of the penetrative element 7 engages the surface 10. This can be considered a start position for the apparatus 1 in determining the thickness of the compliant material 4 upon the core 5. Generally, contact will be determined through loading presented upon the penetrative element 7 and monitored and sensed through a load device 99 in the guide 3. Initially until contact between the end of the penetrative element 7 there will be no resistance and load upon the penetrative element 7 but, at initial contact with the surface 10, there will be a step change identifiable and determinable as a start position. Subsequently through heating of the wire 2 and further driving of the wire 2 to force the penetrative element 7 into the compliant material 4 it will be understood that effectively a pin is driven through the compliant material 4 into engagement with the non compliant ceramic core 5. Clearly, upon engagement with the hard core 5 the load presented will again have a step change identifiable by the load device 99 as an engagement position for the penetrative element 7. The difference between the start position, that is to say at initial engagement on surface 10 by the penetrative element 7 and engagement by the penetrative element 7 with the core 5 will allow determination of the depth of the compliant material 4.

Fig. 2 illustrates an intermediate condition where the penetrative element 7 has engaged the non compliant core 5. Thus, as indicated above, the penetrative element 7 has engaged the non compliant ceramic core 5 after being driven through the compliant material 4. As can be seen, the penetrative element 7 remains substantially perpendicular to the surface of the compliant layer 4. The wire 2 has been driven through and by the guide 3 the necessary amount to cause such movement across the compliant layer 4 between the start position and the engagement position depicted in Fig. 2. In such circumstances the difference between the start position and the engagement position is an accurate indication as to the depth or width of the compliant layer 4. The wire 2 forming the penetrative element 7 as indicated is generally heated with temperature control in order to provide and facilitate driving load through the compliant material 4. It will be understood aspects of the present invention require only determination of the contact point between an end of the penetrative element 7 and the compliant material 4 as an initial start position and engagement with the non compliant ceramic core 5. Thus, if load differentials in driving between the surface 10 and an engagement surface 11 of the core 5 should vary, this is less important that identifying the step change in load upon initial contact, that is to say that the start position and abrupt halt loadings for the penetrative element 7 in engagement with the core 5 at the surface 11. As indicated these loadings are identified by a load cell 12 which detects that the penetrative element as a pin contacts the surfaces 10 and 11. These identified points are triggers for monitoring of movement of the guide 3 and/or driving of the wire 2 so that the depth of the compliant material 4 can be determined.

As indicated, in accordance with aspects of the present invention the guide 3 and wire 2 will generally move in the direction of arrowhead A in order to measure the thickness of the compliant material 4 as well as present an eventual pin for support of the core 5 in use. As the penetrative element 7 to form the pin is generally heated it will be appreciated that to retain position generally the wax as a compliant material 4 about the penetrative element 7 will be allowed to cool once an end is in contact with the core 5. In such circumstances the penetrative element 7 will then be engaged by the compliant material 4 to present that penetrative element 7 as a pin to support the core 5. Once the compliant material 4 has hardened to retain the penetrative element 7 it will be understood that typically about the lower surface 8 of the guide 3 an integral pincer arrangement is provided to cut the wire and so create a pin in accordance with aspects of the present invention.

Fig. 3 illustrates an end of process condition for the apparatus 1 in accordance with aspects of the present invention. Thus, as can be seen, the operative element 7a is detached from the wire 2 as indicated typically through pincers associated with the guide 3. However, where pre-cut pins are used there would be no need for potentially distortive pincers. In such circumstances the guide 3 is removed or displaced upwardly in the direction of arrowhead B to allow the assembly of the compliant material 4 in the core 5 to be manipulated as indicated previously typically in a cradle to allow further measurement and pinning in accordance with aspects of the present invention at locations necessary to support the core 5 as well as determine the depth of the compliant material 4 thereof. As can be seen, the penetrative element 7a takes the form of a pin which engages the surface 11 of the core 5 and in association with other pins will support and locate that core 5 within the compliant material 4 such as wax in use. A tail end part 12 extends beyond the surface 10 and, as indicated previously, becomes associated with a shell material which sandwiches the compliant material 4 when used to create a casting mould.

It will be understood that the situation illustrated in Fig. 3 is ready to allow the apparatus 1 to provide further measurement and pinning in accordance with aspects of the present invention. In such circumstances further wire 2a is drawn through the guide 3 and where necessary will extend as depicted in Fig. 1 beyond the bottom surface 8 of the guide 3. The cradle will then be moved to present the guide appropriately over another part of the compliant material (wax) pattern.

As will be understood the load cell 99 utilised in accordance with aspects of the present invention must be relatively sensitive in order to determine the contact start and engagement positions to determine depth whilst avoiding excessive pressure being placed upon the core 5 which may displace core position or cause bending of the penetrative element 7 resulting in spurious results with regard to measurement of the thickness of the compliant material 4.

A particular advantage of aspects of the present invention is the ability to combine the measurement process with pinning so reducing costs and time for these processes. It will be understood that prior approaches with regard to ultra sonic determination of compliant material thickness utilising ultra sound have been unreliable due to the necessity of presenting the probe or stylus accurately. The present method for determining the thickness of the compliant material, that is to say wax, will be at least comparable if not better than such prior approaches. Furthermore, use of location features will enable the measurements to be more repeatable and reproducible than currently performed with ultra sound techniques. The pins will each be given an identifier and therefore the particular thickness at that point addressable by a locator the pin which may not be the case with previous ultra sound approaches which may leave no witness or mark as to previous thickness determinations.

As indicated above, provision of a height sensor 9 may allow quick and simple self calibration of the displacement length for the wire 2 and therefore penetrative element 7.

In addition to, or as an alternative to movement of the guide 3 it will be appreciated that measuring the penetrative element depth into the compliant material 4 could be achieved through the degree of rotation of the reel 6.

Each pattern incorporating the compliant material 4 and cores 5 will typically have an individual serial number which may be read through a barcode or other means of unique serialisation which then provides details of the thickness and pin element positions in accordance with aspects of the present invention to give a possible ability to choose casting combinations for matching in use.

Although it is advantageous to provide measurement of the thickness of the compliant material with a pinning process, it will also be understood that whilst the penetrative element 7 is still hot it will be possible to remove the penetrative element 7 and therefore the apparatus and methods in accordance with aspects of the present invention may simply be utilised in order provide measurement of compliant material depth.

As indicated typically aspects of the present invention are utilised with regard to measuring the thickness and presenting pins for utilisation with regard to wax about cores utilised for lost wax casting techniques. However, alternative compliant materials such as foams, gels and elastomeric materials may also have a layer thickness determined in accordance with aspects of the present invention.

Modifications and alterations to aspects of the present invention described above will be appreciated by those skilled in the art. Thus, as indicated above a pincer may be utilised in order to cut the wire leaving the penetrative element behind as a pin to support a core. Alternatively, the guide may incorporate a magazine of elements which can be driven by the guide into the compliant material with each pin element longer than necessary such that a tail end 12 remains beyond the surface 10 of the compliant layer without a cutting operation which may distort the pin. It will also be appreciated that the penetrative element 7 may be shaped at its end to achieve consistent penetration through the compliant material 4.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of determining depth in a compliant material (4) using a penetrative element (7) driven through the compliant material to a non compliant core (5), the method **characterised by**:
a) positioning a guide (3) to present the penetrative element to provide contact between an end of the penetrative element and the compliant material as a start position.
b) driving the penetrative element through the compliant material to engage with the non compliant core whilst monitoring such engagement by necessary drive load upon the penetrative element and,
c) comparing the start position with an engagement position at which the penetrative element engages with the non compliant core to determine the depth of the compliant material by displacement length of the penetrative element.

2. A method as claimed in claim 1 wherein the guide is offset from the compliant material.

3. A method as claimed in claim 1 or claim 2 wherein the penetrative element is perpendicular to the compliant material.

4. A method as claimed in any of claims 1, 2 or 3 wherein the penetrative element is heated by the guide.

5. A method as claimed in any preceding claim wherein the penetrative element is retained within the compliant material.

6. A method as claimed in claim 4 and any claim dependent thereon wherein the penetrative element is retained by removing heat from the penetrative element to allow the compliant material to retain the penetrative element.

7. A method as claimed in any preceding claim wherein the penetrative element is a consumable with a proportion of the penetrative element extends beyond the compliant material as a tail (12).

8. A method as claimed in any preceding claim where the penetration element is presented upon a reel and comparison between the start position with the engaged position is determined by monitoring rotation of the reel.

9. A method as claimed in any preceding claim wherein the penetrative element has a graduated scale incorporated into it.

10. A method of manufacturing a turbine blade as claimed in any one of claims 1-9 wherein the compliant material (4) is a wax.

11. A measuring apparatus (1) for determining the depth of a compliant material (4), the apparatus comprising a guide (3) to present a penetrative element (7) and to drive the penetrative element through the compliant material to a non compliant core (5), the apparatus **characterised in that** the guide has a drive element to drive initially the penetrative element until engagement with the compliant material as a start position and then to drive the penetrative element through the compliant material to engagement with the non compliant core as an engagement position and monitor variation in necessary drive load for the penetrative element to determine the start position and the engagement position, the apparatus including a comparator for comparison between the start position and the engagement position to determine a depth for the compliant material by displacement length of the penetrative element.

12. A measuring apparatus as claimed in claim 11 wherein the guide is offset from the compliant material.

13. An apparatus as claimed in claim 11 or claim 12 wherein the penetrative element is perpendicular to the compliant material.

14. An apparatus as claimed in any of claims 11 to 13 wherein the penetrative element is a wire (2).

15. An apparatus as claimed in any of claims 11 to 14 wherein the guide incorporates a heater to heat the penetrative element.

16. An apparatus as claimed in any of claims 11 to 15 wherein the penetrative element is retained within the compliant material.

17. An apparatus as claimed in any of claims 11 to 15 wherein in use the penetrative element supports the non compliant core.

18. An apparatus as claimed in any of claims 11 to 17 wherein the penetrative element is delivered by a reel (6) or individual pins from hopper or cassette or magazine with a selector to present the penetration element.

19. An apparatus as claimed in any of claims 11 to 18 wherein the guide acts as an anvil to drive the penetrative element as a pin into the compliant material.

20. An apparatus as claimed in any of claims 11 to 19 wherein the compliant material is a wax.

21. An apparatus as claimed in claim 20 wherein a cradle allows orientation of the penetrative element relative to the compliant material.

22. An apparatus as claimed in claim 21 wherein the cradle allows single axis rotation of the compliant material or allows multi axis rotation to assist with non-perpendicular penetration.

23. A cast mould comprising a non compliant core (5) with a compliant material (4) between that core and a shell with the core supported by penetrative elements (7) utilised in accordance with a method as claimed in any of claims 1 to 8 or formed by an apparatus as claimed in any of claims 9 to 21.

24. A mould as claimed in claim 23 wherein the penetrative element is substantially perpendicular to the compliant material.

25. A mould as claimed in claim 23 wherein the penetrative element is non perpendicular to the compliant material.

26. A mould as claimed in any of claims 23 to 25 wherein the penetrative element is a wire (2).

27. A mould as claimed in any of claims 23 to 26 wherein the penetrative material is retained within the compliant material.

28. A mould as claimed in any of claims 23 to 27 wherein the penetrative element supports the non compliant core.

29. A mould as claimed in any of claims 23 to 28 wherein the penetrative element has an element which extends beyond the compliant material as a tail (12).

30. A mould as claimed in claim 29 wherein the tail (12) is engaged by the shell material located about the compliant material.

31. A mould as claimed in any of claims 19 to 27 wherein the compliant material is a wax or other compliant material such as putty.

32. A mould as claimed in any of claims 23 to 31 wherein the shell about the compliant material allows removal of the compliant material to provide the casting mould.

33. A mould as claimed in any of claims 23 to 32 wherein the non compliant material is a ceramic.
